# EUROPEAN PATENT SPECIFICATION

(11) **EP 3 425 220 B1**
(45) Date of publication and mention of the grant of the patent: **19.08.2020**
(21) Application number: 16892522.0
(22) Date of filing: 01.03.2016
(51) Int. Cl.: F16C 17/18, F02B 39/14, F16C 33/66, F16C 33/10, F01D 25/18

(54) **BEARING DEVICE AND EXHAUST TURBINE SUPERCHARGER**
LAGERVORRICHTUNG UND ABGASTURBINENAUFLADER
DISPOSITIF DE PALIER ET COMPRESSEUR DE SURALIMENTATION DE TURBINE D'ÉCHAPPEMENT

(43) Date of publication of application: 09.01.2019
(73) Proprietor: Mitsubishi Heavy Industries Engine & Turbocharger, Ltd., Sagamihara-shi, Kanagawa 252-5293 (JP)
(72) Inventor: FUTAE, Takaya, Tokyo 108-8215 (JP); NAMBU, Takashi, Tokyo 108-8215 (JP); ISHIZAKI, Tatsuya, Tokyo 108-8215 (JP); KOJIMA, Yuya, Tokyo 108-8215 (JP); NISHIOKA, Tadasuke, Tokyo 108-8215 (JP)
(74) Representative: Mader, Joachim
(86) International application number: PCT/JP2016/056306
(87) International publication number: WO 2017/149678

(56) References cited:
- WO-A1-2012/057012
- DE-A1-102012 207 010
- JP-A- S 566 917
- JP-A- S6 388 318
- JP-A- H02 305 326
- JP-A- 2004 301 258
- JP-A- 2004 324 460
- JP-A- 2007 100 644
- JP-A- 2010 127 318
- JP-A- 2015 028 328
- JP-U- S 606 838
- JP-U- H01 159 132
- US-A1- 2004 197 212
- US-B2- 7 793 499
- US-B2- 8 366 323

## Description

### Technical Field

The present invention relates to a bearing device and an exhaust turbine turbocharger to which the bearing device is applied.

### Background Art

In the related art, for example, PTL 1 discloses a journal bearing (a floating bush bearing). In the journal bearing, a communication hole for lubricating oil is formed from an outer peripheral surface supported by a bearing housing toward an inner peripheral surface supporting a rotating shaft.

DE 10 2012 207 010 discloses a journal bearing without communication hole having a central lubrication passage in the housing according to the preamble of claim 1.

### Citation List

### Patent Literature

[PTL 1] Japanese Patent No. 5337227

### Summary of Invention

### Technical Problem

As described above, with respect to the journal bearing in which the communication hole for lubricating hole is formed from the outer peripheral surface to the inner peripheral surface, in the bearing housing supporting the journal bearing, a lubricating oil supply passage is formed toward the outer peripheral surface of the journal bearing. In addition, a lubricating oil is supplied to the outer peripheral surface of the journal bearing through the lubricating oil supply passage. A portion of the lubricating oil supplied to the outer peripheral surface of the journal bearing forms an oil film between the outer peripheral surface of the journal bearing and the bearing housing, and the other portion of the lubricating oil is supplied to the inner peripheral surface of the journal bearing through the communication hole for lubricating oil to form an oil film between the inner peripheral surface of the journal bearing and the rotating shaft. Accordingly, the journal bearing rotatably supports the rotating shaft.

Meanwhile, in recent years, according to a reduction in a size of an engine corresponding to the improvement of fuel consumption, a reduction in a size and high efficiency of an exhaust turbine turbocharger are required. Accordingly, the maximum rotation speed of the exhaust turbine turbocharger increases. That is, a rotation speed of the rotating shaft increases. A force which returns the lubricating oil from the inner peripheral surface side of the journal bearing to the outer peripheral surface side thereof is applied to the communication hole for lubricating oil by a centrifugal force when the rotating shaft rotates at a high speed, and an amount of the lubricating oil on the inner peripheral surface of the journal bearing decreases. Moreover, in a case where the lubricating oil on the inner peripheral surface of the journal bearing is exhausted, there is a concern that seizure of the inner peripheral surface of the journal bearing and the outer peripheral surface of the rotating shaft may occur. Meanwhile, in order to solve the above-described problem, it is conceivable to increase a supply pressure of the lubricating oil supplied from the lubricating oil supply passage. However, if the supply pressure is too high, discharge of the lubricating oil from the vicinity of the journal bearing increases, and as a result, there is a concern that an amount of the lubricating oil supplied to the outer peripheral surface and the inner peripheral surface of the journal bearing may decrease. In addition, when the rotating shaft is rotated at a low speed, the lubricating oil may be sucked into the inner peripheral surface along a side surface of the journal bearing, and thus, a ratio of a bearing loss caused by a stirring resistance of the lubricating oil increases.

The above noted problems can at least partially be solved by a bearing device according to claim 1 and an exhaust turbine turbocharger according to claim 4. The present invention is made to solve the above-described problems, and an object thereof is to provide a bearing device and an exhaust turbine turbocharger capable of supplying an appropriate amount of lubricating oil.

### Solution to Problem

In order to achieve the above-described object, according to an aspect of the present invention, there is provided a bearing device including: a rotating shaft; journal bearings which are provided on the rotating shaft, rotatably support the rotating shaft at at least two locations in an axial direction, and each of which includes an outer peripheral surface and an inner peripheral surface which do not communicate with each other; a bearing accommodating portion which forms a space portion accommodating each journal bearing; an outer peripheral surface-side lubricating oil supply passage which communicates with the space portion at a position of the outer peripheral surface of each journal bearing; and an intermediate portion lubricating oil supply passage which communicates with the space portion at a position between the journal bearings.

According to this bearing device, a lubricating oil is supplied to the outer peripheral surfaces of the respective journal bearings through the respective outer peripheral surface-side lubricating oil supply passages. In addition, the lubricating oil is supplied to the space portion accommodating the journal bearings through the intermediate portion lubricating oil supply passage, and thus, the lubricating oil is supplied to the inner peripheral surfaces of the journal bearings. In this way, the lubricating oil is separately supplied to the outer peripheral surfaces and the inner peripheral surfaces of the journal bearings, respectively, and thus, it is possible to supply an appropriate amount of lubricating oil without excess or deficiency. Moreover, according to this bearing device, the outer peripheral surface and the inner peripheral surface of each journal bearing do not communicate with each other, and thus, it is possible to prevent a force by which the lubricating oil is returned from the inner peripheral surface of the journal bearing to the outer peripheral surface side from being applied by a centrifugal force when the rotating shaft is rotated at a high speed, and thus, it is possible to prevent an amount of the lubricating oil from decreasing on the inner peripheral surface of each journal bearing.

In addition, in the bearing device of the present invention, the journal bearings are configured to be separated from each other, and the bearing device further includes a nozzle which is provided at a discharge port at which the intermediate portion lubricating oil supply passage communicates with the space portion and is disposed such that an injection port of the nozzle faces each journal bearing.

According to this bearing device, the lubricating oil is injected to the respective journal bearings by the nozzle, and thus, it is possible to reliably supply the lubricating oil to a portion between the inner peripheral surface of each journal bearing and the outer peripheral surface of the rotating shaft.

Moreover, in the bearing device of the present invention, the journal bearings are configured to be separated from each other, and the bearing device further includes a tubular member which is provided between the journal bearings such that the rotating shaft is inserted into the tubular member and is accommodated in the space portion of the bearing accommodating portion, and a through-hole which penetrates the tubular member in a radial direction and communicates with the intermediate portion lubricating oil supply passage.

According to this bearing device, the tubular member having the through-hole formed to communicate with the intermediate portion lubricating oil supply passage is disposed between the journal bearings configured to be separated from each other in the space portion of the bearing accommodating portion, and thus, it is possible to reliably supply the lubricating oil to the portion between the inner peripheral surface of each journal bearing and the outer peripheral surface of the rotating shaft via the tubular member.

In order to achieve the above-described object, according to another aspect of the present invention, there is provided an exhaust turbine turbocharger including: a turbine; a compressor; a rotating shaft which coaxially connects the turbine and the compressor to each other; a journal bearing which is provided on the rotating shaft and rotatably supports the rotating shaft; and the above-described bearing device.

According to this exhaust turbine turbocharger, the lubricating oil is supplied to the outer peripheral surfaces of the respective journal bearings through the respective outer peripheral surface-side lubricating oil supply passages. In addition, the lubricating oil is supplied to the space portion accommodating the journal bearings through the intermediate portion lubricating oil supply passage, and thus, the lubricating oil is supplied to the inner peripheral surfaces of the journal bearings. In this way, the lubricating oil is separately supplied to the outer peripheral surfaces and the inner peripheral surfaces of the journal bearings, respectively, and thus, it is possible to supply an appropriate amount of lubricating oil without excess or deficiency. As a result, it is possible to rotate the rotating shaft at a high speed, and it is possible to reduce a size of the exhaust turbine turbocharger and increase efficiency thereof.

### Advantageous Effects of Invention

According to the present invention, it is possible to supply an appropriate amount of lubricating oil.

### Brief Description of Drawings

Fig. 1 is an overall configuration view of an exhaust turbine turbocharger according to an embodiment of the present invention.
Fig. 2 is an enlarged view of a bearing portion of the exhaust turbine turbocharger according to the embodiment of the present invention.
Fig. 3 is an enlarged view of another example of the bearing portion of the exhaust turbine turbocharger according to the embodiment of the present invention.
Fig. 4 is an enlarged view of still another example of the bearing portion of the exhaust turbine turbocharger according to the embodiment of the present invention.
Fig. 5 is an enlarged view of still another example of the bearing portion of the exhaust turbine turbocharger according to the embodiment of the present invention. Description of Embodiments

Hereinafter, an embodiment according to the present invention will be described in detail with reference to the drawings. In addition, the present invention is not limited by the embodiment. In addition, constituent elements in the following embodiment include constituent elements which can be easily replaced by those skilled in the art or constituent elements which are substantially the same.

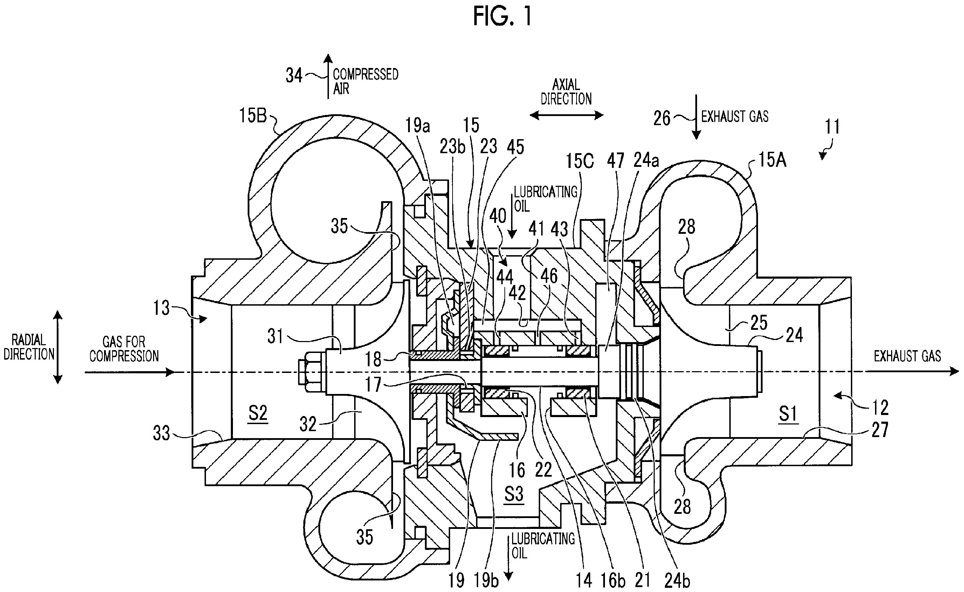

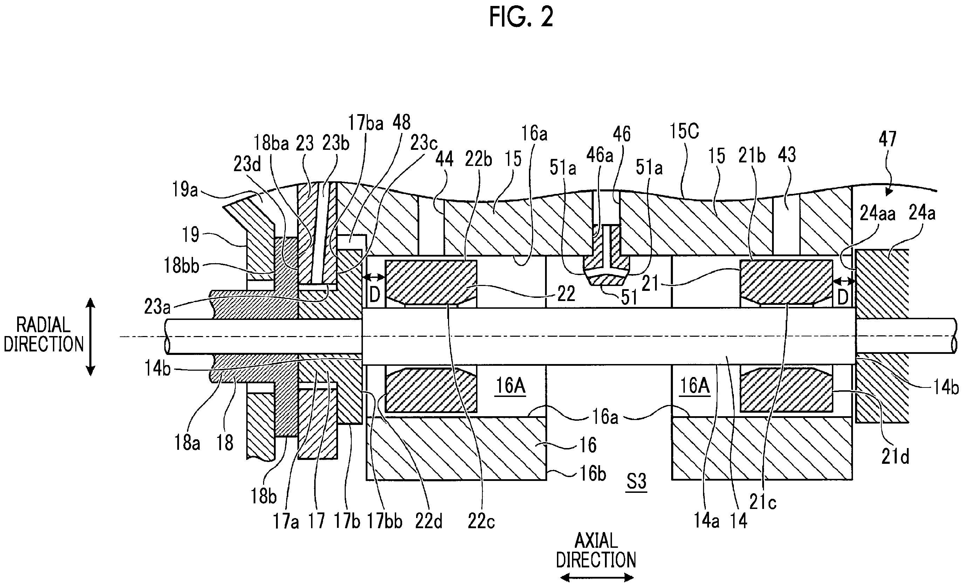

Fig. 1 is an overall configuration view of an exhaust turbine turbocharger according to the present embodiment. Fig. 2 is an enlarged view of a bearing portion of the exhaust turbine turbocharger according to the present embodiment.

An exhaust turbine turbocharger 11 shown in Fig. 1 mainly includes a turbine 12, a compressor 13, and a rotating shaft 14, and these are accommodated in a housing 15.

An inside of the housing 15 is formed in a hollow shape, and the housing 15 includes a turbine housing 15A forming a first space portion S1 in which a configuration of the turbine 12 is accommodated, a compressor cover 15B forming a second space portion S2 in which a configuration of the compressor 13 is accommodated, and a bearing housing 15C forming a third space portion S3 in which the rotating shaft 14 is accommodated. The third space portion S3 of the bearing housing 15C is positioned between the first space portion S1 of the turbine housing 15A and the second space portion S2 of the compressor cover 15B.

In the rotating shaft 14, an end portion on the turbine 12 side is rotatably supported by a journal bearing 21 which is a turbine-side bearing, an end portion on the compressor 13 side is rotatably supported by a journal bearing 22 which is a compressor-side bearing, and a movement of the rotating shaft 14 in an axial direction in which the rotating shaft 14 extends is regulated by a thrust bearing 23. In addition, a turbine disk 24 of the turbine 12 is fixed to one end portion of the rotating shaft 14 in the axial direction. The turbine disk 24 is accommodated in the first space portion S1 of the turbine housing 15A, and a plurality of turbine blades 25 forming an axial flow type are provided on an outer peripheral portion of the turbine disk 24 with a predetermined gap therebetween in a circumferential direction. In addition, a compressor impeller 31 of the compressor 13 is fixed to the other end portion of the rotating shaft 14 in the axial direction, the compressor impeller 31 is accommodated in the second space portion S2 of the compressor cover 15B, and a plurality of blades 32 are provided on an outer peripheral portion of the compressor impeller 31 with a predetermined gap therebetween in the circumferential direction.

Moreover, the turbine housing 15A includes an inlet passage 26 of an exhaust gas and an outlet passage 27 of the exhaust gas with respect to the turbine blades 25. In addition, in the turbine housing 15A, a turbine nozzle 28 is provided between the inlet passage 26 and the turbine blades 25, an axial exhaust gas flow which is statically pressure-expanded by the turbine nozzle 28 is led to the plurality of turbine blades 25 by the turbine nozzle 28, and thus, the turbine 12 can be rotationally driven. In addition, the compressor cover 15B includes an air intake port 33 and a compressed air discharge port 34 with respect to the compressor impeller 31. In addition, in the compressor cover 15B, a diffuser 35 is provided between the compressor impeller 31 and the compressed air discharge port 34. Air compressed by the compressor impeller 31 is discharged through the diffuser 35.

In the exhaust turbine turbocharger 11 configured as described above, the turbine 12 is driven by an exhaust gas discharged from an engine (not shown), a rotation of the turbine 12 is transmitted to the rotating shaft 14 to drive the compressor 13, and the compressor 13 compresses a combustion gas to supply the compressed combustion gas to the engine. Accordingly, the exhaust gas from the engine passes through the inlet passage 26 of the exhaust gas and is statically pressure-expanded by the turbine nozzle 28, and the axial exhaust gas flow is led to the plurality of turbine blades 25. Therefore, the turbine 12 is rotationally driven via the turbine disk 24 to which the plurality of turbine blades 25 are fixed. In addition, the exhaust gas which drives the plurality of turbine blades 25 is discharged to the outside from the outlet passage 27. Meanwhile, if the rotating shaft 14 is rotated by the turbine 12, and the integral compressor impeller 31 is rotated, and air is sucked through the air intake port 33. The sucked air is compressed by the compressor impeller 31 and becomes compressed air, and the compressed air is supplied from the compressed air discharge port 34 to the engine through the diffuser 35.

In addition, in the exhaust turbine turbocharger 11, a lubricating oil supply passage 40 through which a lubricating oil is supplied to the journal bearings 21 and 22 and the thrust bearing 23 is provided in the bearing housing 15C. The lubricating oil supply passage 40 includes a first supply passage 41 formed in a radial direction on an upper portion of the bearing housing 15C, a second supply passage 42 formed in the axial direction on the upper portion of the bearing housing 15C, a third supply passage (outer peripheral surfaced-side lubricating oil supply passage) 43 which communicates with the journal bearing 21, a fourth supply passage (outer peripheral surface-side lubricating oil supply passage) 44 which communicates with the journal bearing 22, a fifth supply passage 45 which communicates with the thrust bearing 23, and a sixth supply passage (intermediate portion lubricating oil supply passage) 46 which communicates with a space portion 16A of a bearing accommodating portion 16. A base end portion of the first supply passage 41 is connected to a lubricating oil tank (not show), and a tip end portion thereof is connected to an intermediate portion of the second supply passage 42. A base end portion of the third supply passage 43 communicates with the second supply passage 42 and a tip end portion thereof communicates with the journal bearing 21. A base end portion of the fourth supply passage 44 communicates with the second supply passage 42 and a tip end portion thereof communicates with the journal bearing 22. A base end portion of the fifth supply passage 45 communicates with the second supply passage 42 and a tip end portion thereof communicates with the thrust bearing 23. A base end portion of the sixth supply passage 46 communicates with the second supply passage 42 and a tip end portion thereof communicates with the space portion 16A of the bearing accommodating portion 16 between the two journal bearings 21 and 22.

As shown in Fig. 1 and 2, each of the journal bearings 21 and 22 is formed in a cylindrical shape. The journal bearings 21 and 22 are configured to be separated from each other and are accommodated in a columnar space portion 16A which is formed by the bearing accommodating portion 16 provided in the third space portion S3 in the bearing housing 15C. In the bearing accommodating portion 16 supporting the respective journal bearings 21 and 22, a passage 16b leading to a lower portion of the third space portion S3 between the journal bearings 21 and 22 is formed.

As shown in Fig. 2, the journal bearing 21 is rotatably supported between an outer peripheral surface 21b and an inner surface 16a of the bearing accommodating portion 16, and the journal bearing 21 rotatably supports the rotating shaft 14 between an inner peripheral surface 21c and an outer peripheral surface 14a of the rotating shaft 14. In the journal bearing 21, the tip end portion of the third supply passage 43 communicate with the outer peripheral surface 21b. Moreover, the journal bearing 21 shown in the drawings does not communicate with the outer peripheral surface 21b and the inner peripheral surface 21c.

As shown in Fig. 2, apart from the journal bearing 21, the journal bearing 22 is rotatably supported between the outer peripheral surface 22b and the inner surface 16a of the bearing accommodating portion 16, and the journal bearing 22 rotatably supports the rotating shaft 14 between an inner peripheral surface 22c and the outer peripheral surface 14a of the rotating shaft 14. In the journal bearing 22, the tip end portion of the fourth supply passage 44 communicate with the outer peripheral surface 22b. Moreover, the journal bearing 22 shown in the drawings does not communicate with the outer peripheral surface 22b and the inner peripheral surface 22c.

As shown in Fig.1, the thrust bearing 23 is disposed on the compressor 13 side to be adjacent to the journal bearing 22 in the axial direction of the rotating shaft 14. As shown in Fig. 2, the thrust bearing 23 is formed in a plate shape having an insertion hole 23a into which the rotating shaft 14 is inserted and is fixed to the bearing housing 15C. In addition, a passage 23b is formed in the thrust bearing 23. A base end portion of the passage 23b communicates with the tip end portion of the fifth supply passage 45 and a tip end portion thereof communicate with the insertion hole 23a. The thrust bearing 23 regulates an axial movement of the rotating shaft 14 via a thrust ring 17 and a thrust sleeve 18.

As shown in Fig. 2, the thrust ring 17 includes a boss portion 17a and a flange portion 17b. The boss portion 17a is formed in a cylindrical shape, is fitted to a portion in which an end portion of the rotating shaft 14 on the compressor 13 side is formed in a small diameter via a step portion 14b, abuts against the step portion 14b to be positioned in the axial direction, and is inserted into the insertion hole 23a of the thrust bearing 23 along with the rotating shaft 14. The flange portion 17b is a disk member which protrudes radially outward from a portion of the boss portion 17a abutting against the step portion 14b, and includes one facing portion 17ba disposed to face a plate surface 23c of the thrust bearing 23 on the journal bearing 22 side in the axial direction and the other facing portion 17bb disposed to face a side surface portion 22d of the journal bearing 22 with the gap D therebetween in the axial direction.

As shown in Fig. 2, the thrust sleeve 18 includes a boss portion 18a and a flange portion 18b. The boss portion 18a is formed in a cylindrical shape, is fitted to a portion which is formed in a small diameter on the end portion of the rotating shaft 14 on the compressor 13 side, and abuts against the end surface of the boss portion 17a on the compressor 13 side in the thrust ring 17 to be positioned in the axial direction. The flange portion 18b is a disk member which protrudes radially outward from a portion of the boss portion 18a abutting against the boss portion 17a of the thrust ring 17, and includes one facing portion 18ba which is disposed to face a plate surface 23d of the thrust bearing 23 on the compressor 13 side in the axial direction and the other facing portion 18bb which is disposed to face an oil storage portion 19 forming an oil storage space 19a from the compressor 13 side toward the thrust bearing 23 side in the axial direction. The oil storage portion 19 is formed such that the oil storage space 19a communicates with the lower portion of the third space portion S3.

That is, each of the thrust ring 17 and the thrust sleeve 18 is disposed such that the thrust bearing 23 is interposed between the facing portions 17ba and 18ba positioned one side of the flange portions 17b and 18b. Accordingly, the thrust bearing 23 regulates the axial movement of the rotating shaft 14 via the thrust ring 17 and the thrust sleeve 18.

In addition, as shown in Fig. 1, the turbine disk 24 of the turbine 12 includes a boss portion 24a protruding to the compressor 13 side such that the turbine disk 24 is disposed to be adjacent to the journal bearing 21 in the axial direction. The boss portion 24a is formed in a cylindrical shape, is fitted to a portion in which an end portion of the rotating shaft 14 on the turbine 12 side is formed in a small diameter via a step portion 14b, and abuts against the step portion 14b to be positioned in the axial direction. As shown in Fig.2, the portion of the boss portion 24a abutting against the step portion 14b is a disk member which covers an opening of a columnar space on the turbine 12 side formed by the bearing accommodating portion 16, and the boss portion 24a includes a facing portion 24aa which is disposed so as to face the side surface portion 21d of the journal bearing 21 with a gap D therebetween in the axial direction. In addition, in the bearing housing 15C, an oil discharge space chamber 47 is formed on an outer peripheral portion of the boss portion 24a. Moreover, in the turbine disk 24 of the turbine 12, a seal portion 24b is formed between the boss portion 24a and the turbine disk 24 in the axial direction. The seal portion 24b forms a seal portion with the bearing housing 15C.

Here, a flow of the lubricating oil will be described. Although it is not shown in the drawings, in the bearing housing 15C, a base end portion of a lubricating oil discharge pipe is connected to the lower portion of the third space portion S3. A tip end portion of the lubricating oil discharge pipe is connected to an oil pan. The oil pan is connected to the lubricating oil tank, which is connected to first supply passage 41 of the lubricating oil supply passage 40, via a lubricating oil circulation line. An oil pump and an oil filter are interposed in the lubricating oil circulation line, and the lubricating oil of which impurities are filtered by the oil filter is fed from the oil pan to the lubricating oil tank via the lubricating oil circulation line by the oil pump. In addition, the lubricating oil is supplied from the lubricating oil tank to the first supply passage 41.

The lubricating oil supplied to the first supply passage 41 is led to the third supply passage 43, the fourth supply passage 44, the fifth supply passage 45, and the sixth supply passage 46 via the second supply passage 42. The lubricating oil led to the third supply passage 43 is supplied to the outer peripheral surface 21b of the journal bearing 21. In addition, the lubricating oil led to the fourth supply passage 44 is supplied to the outer peripheral surface 22b of the journal bearing 22. Moreover, the lubricating oil led to the sixth supply passage 46 is fed to the space portion 16A of the bearing accommodating portion 16 to be accommodated in the space portion 16A of the bearing accommodating portion 16. The lubricating oil is supplied to the inner peripheral surfaces 21c and 22c of the respective journal bearings 21 and 22. In addition, the lubricating oil led to the fifth supply passage 45 is supplied to the passage 23b of the thrust bearing 23.

In the journal bearing 21, as described above, the lubricating oil is supplied to each of the outer peripheral surface 21b and the inner peripheral surface 21c. Accordingly, the journal bearing 21 is rotatably supported by the bearing accommodating portion 16 using the lubricating oil supplied to a portion between the outer peripheral surface 21b and the inner surface 16a of the bearing accommodating portion 16, and rotatably supports the rotating shaft 14 by the lubricating oil supplied to a portion between the inner peripheral surface 21c and the outer peripheral surface 14a of the rotating shaft 14.

In the journal bearing 21, the lubricating oil supplied to the outer peripheral surface 21b side and the inner peripheral surface 21c side flows from the passage 16b of the bearing accommodating portion 16 toward a lower portion of the third space portion S3 on the compressor 13 side. Meanwhile, in the journal bearing 21, the lubricating oil supplied to the outer peripheral surface 21b side and the inner peripheral surface 21c side flows to the side surface portion 21d side on the turbine 12 side, is fed to a radially outer side by a centrifugal force of the rotation of the rotating shaft 14 in the facing portion 24aa of the facing boss portion 24a so as to reach the oil discharge space chamber 47 on an outer peripheral portion of the boss portion 24a, and flows from the oil discharge space chamber 47 to the lower portion of the third space portion S3.

In the journal bearing 22, as described above, the lubricating oil is supplied to each of the outer peripheral surface 22b and the inner peripheral surface 22c. Accordingly, the journal bearing 22 is rotatably supported by the bearing accommodating portion 16 using the lubricating oil supplied to the portion between the outer peripheral surface 22b and the inner surface 16a of the bearing accommodating portion 16, and the journal bearing 22 rotatably supports the rotating shaft 14 by the lubricating oil supplied to the portion between the inner peripheral surface 22c and the outer peripheral surface 14a of the rotating shaft 14.

In the journal bearing 22, the lubricating oil supplied to the outer peripheral surface 22b side and the inner peripheral surface 22c side flows from the passage 16b of the bearing accommodating portion 16 toward a lower portion of the third space portion S3 on the turbine 12 side. Meanwhile, in the journal bearing 22, the lubricating oil supplied to the outer peripheral surface 22b side and the inner peripheral surface 22c side flows to the side surface portion 22d side on the compressor 13 side, is fed to a radially outer side by the centrifugal force of the rotation of the rotating shaft 14 in the facing portion 17bb of the flange portion 17b of the facing thrust ring 17, and flows to the lower portion of the third space portion S3 through a clearance 48.

In the thrust bearing 23, the lubricating oil supplied to the insertion hole 23a is led to portions between the respective plate surfaces 23c and 23d of the thrust bearing 23 and the respective facing portions 17ba and 18ba of the flange portions 17b and 18b. Accordingly, the thrust bearing 23 decreases a friction resistance between the facing portions 17ba and 18ba by the lubricating oil supplied to the portion between the respective facing portions 17ba and 18ba of the flange portions 17b and 18b while regulating the axial movement of the rotating shaft 14 between the facing portions 17ba and 18ba.

In the thrust bearing 23, on the facing portion 18ba side of the flange portion 18b of the thrust sleeve 18, the lubricating oil is fed to the radially outer side by the centrifugal force of the rotation of the rotating shaft 14, a portion of the lubricating oil flows to the lower portion of the third space portion S3 on the lower side of the flange portion 18b along an outer peripheral portion of the flange portion 18b, and a portion of the lubricating oil reaches the oil storage space 19a of the oil storage portion 19. The oil storage portion 19 includes a tongue piece 19b which extends from the lower side of the oil storage portion 19, and the oil storage space 19a is formed around the rotating shaft 14 and communicates with the lower portion of the third space portion S3 via the tongue piece 19b. Accordingly, the lubricating oil which has reached the oil storage space 19a flows to the lower portion of the third space portion S3 along the tongue piece 19b. Meanwhile, in the thrust bearing 23, on the facing portion 17ba side of the flange portion 17b of the thrust ring 17, the lubricating oil is fed to the radially outer side by the centrifugal force of the rotation of the rotating shaft 14. The clearance 48 is formed between the outer peripheral portion of the flange portion 17b and the bearing housing 15C, and the clearance 48 communicates with the lower portion of the third space portion. Accordingly, the lubricating oil fed to the radially outer side on the facing portion 17ba side flows to the lower portion of the third space portion S3 through the clearance 48.

In addition, the lubricating oil which has flowed from each location to the lower portion of the third space portion S3 is fed to the oil pan via the lubricating oil discharge pipe (not shown).

In this way, the bearing device of the present embodiment includes the rotating shaft 14, the journal bearings 21 and 22 which are provided on the rotating shaft 14 and rotatably support the rotating shaft 14 at at least two location in the axial direction, the bearing accommodating portion 16 which forms the space portion 16A accommodating the journal bearings 21 and 22, the third supply passage 43 and the fourth supply passage 44 which are the respect outer peripheral surface-side lubricating oil supply passages which communicate with the space portion 16A at the outer peripheral surfaces 21b and 22b of the journal bearings 21 and 22, and the sixth supply passage 46 which is the intermediate portion lubricating oil supply passage which communicates with the space portion 16A at the position between the journal bearings 21 and 22.

According to this bearing device, the lubricating oil is supplied to the outer peripheral surfaces 21b and 22b of the respective journal bearings 21 and 22 through the third supply passage 43 and the fourth supply passage 44 which are the respective outer peripheral surface-side lubricating oil supply passages. In addition, the lubricating oil is supplied to the space portion 16A which accommodates the journal bearings 21 and 22 through the sixth supply passage 46 which is the intermediate portion lubricating oil supply passage, and thus, the lubricating oil is supplied to the inner peripheral surfaces 21c and 22c of the journal bearings 21 and 22. In this way, the lubricating oil is separately supplied to the outer peripheral surfaces 21b and 22b and the inner peripheral surfaces 21c and 22c of the journal bearings 21 and 22, respectively, and thus, it is possible to supply an appropriate amount of lubricating oil without excess or deficiency.

In addition, in the bearing device of the present embodiment, the journal bearings 21 and 22 is configured such that the outer peripheral surfaces 21b and 22b and the inner peripheral surfaces 21c and 22c do not communicate with each other.

According to this bearing device, it is possible to prevent a force by which the lubricating oil is returned from the inner peripheral surfaces 21c and 22c sides of the journal bearings 21 and 22 to the outer peripheral surface 21b and 22b sides thereof from being applied by a centrifugal force when the rotating shaft 14 is rotated at a high speed, and thus, it is possible to prevent the amount of the lubricating oil from decreasing on the inner peripheral surfaces 21c and 22c of the journal bearings 21 and 22. In addition, in a case where the applied centrifugal force when the rotating shaft 14 is rotated is small, a communication hole for lubricating oil (not shown) which communicate with the outer peripheral surfaces 21b and 22b and the inner peripheral surfaces 21c and 22c of the journal bearings 21 and 22 may be provided. Moreover, in a case where the communication hole for lubricating oil is provided, preferably, the communication hole for lubricating oil has a hole diameter so as not to be affected by the centrifugal force when the rotating shaft 14 is rotated.

In addition, as shown in Fig. 2, in the bearing device of the present embodiment, the journal bearings 21 and 22 are configured to be separated from each other. Moreover, the nozzle 51 is provided in a discharge port 46a at which the sixth supply passage 46 which is the intermediate portion lubricating oil supply passage communicates with the space portion 16A. The nozzle 51 has injection ports 51a facing the respective journal bearings 21 and 22. As long as at least one injection port 51a faces each of the journal bearings 21 and 22, a plurality of injection ports 51a may be provided. In addition, preferably, the injection ports 51a are provided so as to face the outer peripheral surface 14a of the rotating shaft 14 around the journal bearings 21 and 22 such that the lubricating oil spreads to portions between the inner peripheral surfaces 21c and 22c of the respective journal bearings 21 and 22 and the outer peripheral surface 14a of the rotating shaft 14.

According to this bearing device, the lubricating oil is injected to the respective journal bearings 21 and 22 by the nozzle 51, and thus, it is possible to reliably supply the lubricating oil to the portions between the inner peripheral surfaces 21c and 22c of the journal bearings 21 and 22 and the outer peripheral surface 14a of the rotating shaft 14.

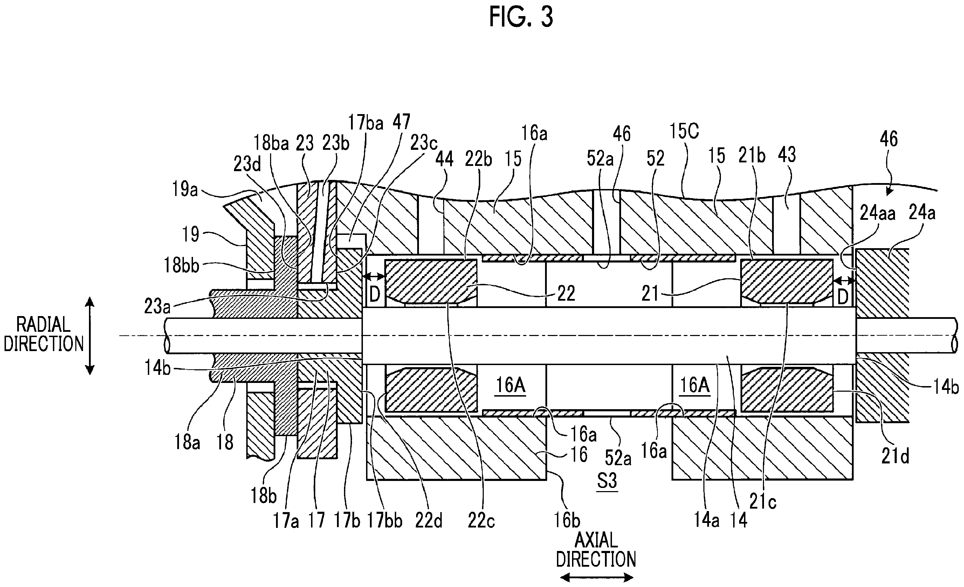

Fig. 3 is an enlarged view of another example of the bearing portion of the exhaust turbine turbocharger according to the present embodiment.

In the bearing device shown in Fig. 3, the journal bearings 21 and 22 are configured to be separated from each other. In addition, a tubular member 52 is accommodated in the space portion 16A of the bearing accommodating portion 16 with which the sixth supply passage 46 which is the intermediate portion lubricating oil supply passage communicates. The tubular member 52 is a cylindrical member having both ends opened in the axial direction, the rotating shaft 14 is inserted into the tubular member 52, and the tubular member 52 is disposed between the journal bearings 21 and 22 such that opening ends of the tubular member 52 face the respective journal bearings 21 and 22. In addition, in the tubular member 52, a through-hole 52a penetrating the tubular member 52 in the radial direction is formed such that the tubular member 52 communicates with the sixth supply passage 46 which is the intermediate portion lubricating oil supply passage. A plurality of through-holes 52a are formed in a circumferential direction of the tubular member 52. The tubular member 52 may be fixed to the bearing accommodating portion 16 or may be rotatably provided in the space portion 16A without being fixed. In a case where the tubular member 52 is fixed to the bearing accommodating portion 16, at least the through-hole 52a which communicates with the sixth supply passage 46 which is the intermediate portion lubricating oil supply passage and the through-hole 52a which communicates with the lower portion of the third space portion S3 are formed. In addition, opening areas of the through-hole 52a are smaller than an opening area of the passage 16b communicating with the lower portion of the third space portion S3 in the bearing accommodating portion 16.

According to this bearing device, the tubular member 52 having the through-holes 52a formed to communicate with the sixth supply passage 46 which is the intermediate portion lubricating oil supply passage is disposed between the journal bearings 21 and 22 configured to be separated from each other in the space portion 16A of the bearing accommodating portion 16, and thus, it is possible to reliably supply the lubricating oil to the portions between the inner peripheral surfaces 21c and 22c of the respective journal bearings 21 and 22 and the outer peripheral surface 14a of the rotating shaft 14 via the tubular member 52.

Moreover, if the opening areas of the through-holes 52a are formed to be smaller than the opening area of the passage 16b communicating with the lower portion of the third space portion S3 in the bearing accommodating portion 16, an amount of the lubricating oil discharged to the lower portion of the third space portion S3 is limited, and thus, it is possible to reliably supply the lubricating oil to the portions between the inner peripheral surfaces 21c and 22c of the respective journal bearings 21 and 22 and the outer peripheral surface 14a of the rotating shaft 14.

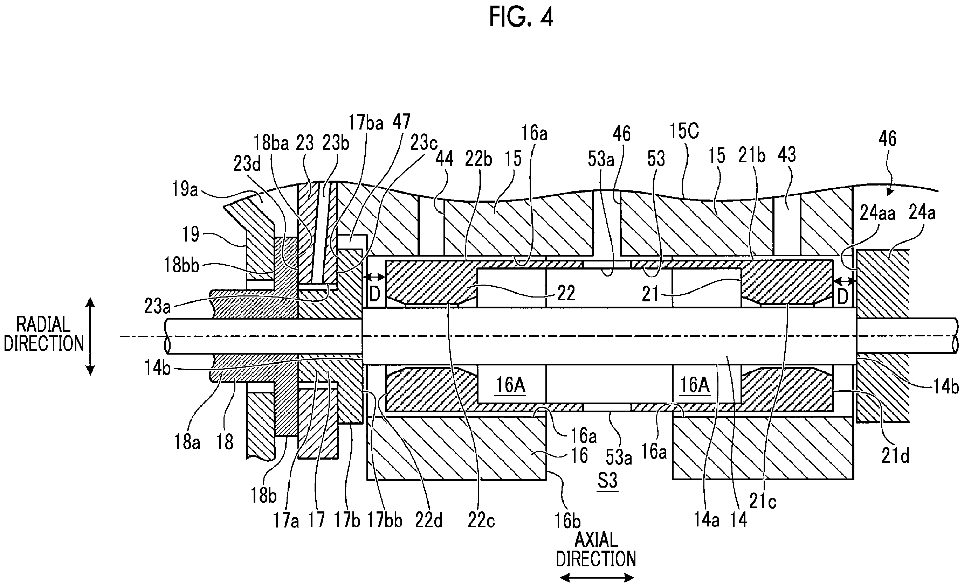

Fig. 4 is an enlarged view of still another example of the bearing portion of the exhaust turbine turbocharger according to the present embodiment.

In the bearing device shown in Fig. 4, the journal bearings 21 and 22 configuring the bearing device are provided to be connected to each other. Specifically, the respective journal bearings 21 and 22 are connected by a connection portion 53 as shown in Fig. 4. For example, the connection portion 53 is a tubular member, a plurality of rod-shaped members, or the like. In a case of the tubular member, as shown in Fig. 4, a through-hole 53a penetrating the tubular member in the radial direction is formed such that the tubular member 52 communicates with the sixth supply passage 46 which is the intermediate portion lubricating oil supply passage. A plurality of through-holes 53a are formed in a circumferential direction of the connection portion 53 which is the tubular member. In addition, opening areas of the through-hole 53a are smaller than the opening area of the passage 16b communicating with the lower portion of the third space portion S3 in the bearing accommodating portion 16.

According to this bearing device, the journal bearings 21 and 22 may be provided to be connected to each other. In addition, in the case where the connection portion 53 is a tubular member, it is possible to reliably supply the lubricating oil to the portions between the inner peripheral surfaces 21c and 22c of the respective journal bearings 21 and 22 and the outer peripheral surface 14a of the rotating shaft 14 via the tubular member.

Moreover, in a case where the connection portion 53 is the tubular member and the through-holes 53a penetrating the tubular member in the radial direction are formed such that the tubular member communicates with the sixth supply passage 46 which is the intermediate portion lubricating oil supply passage, if the opening areas of the through-holes 53a are formed to be smaller than the opening area of the passage 16b communicating with the lower portion of the third space portion S3 in the bearing accommodating portion 16, an amount of the lubricating oil discharged to the lower portion of the third space portion S3 is limited, and thus, it is possible to reliably supply the lubricating oil to the portions between the inner peripheral surfaces 21c and 22c of the journal bearings 21 and 22 and the outer peripheral surface 14a of the rotating shaft 14.

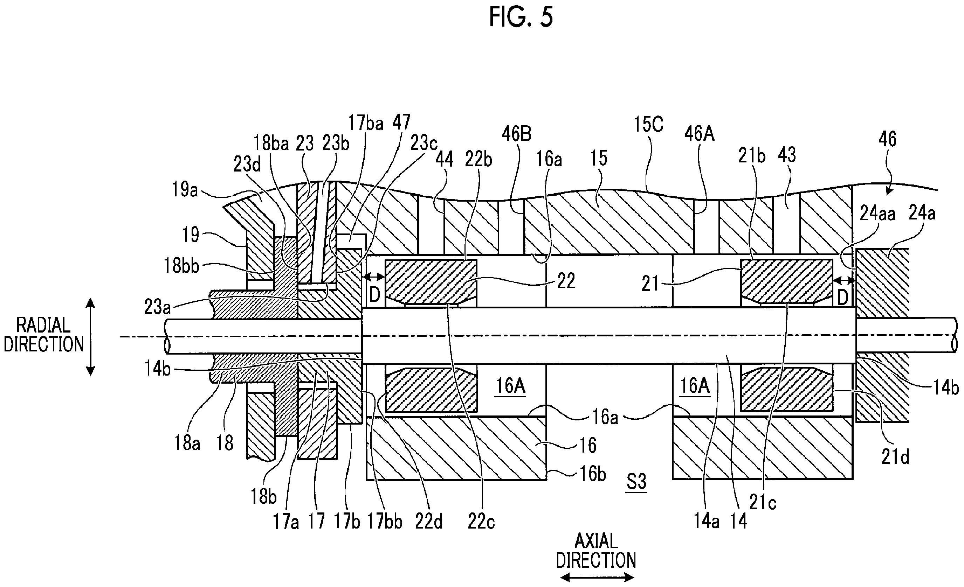

Fig. 5 is an enlarged view of still another example of the bearing portion of the exhaust turbine turbocharger according to the present embodiment.

In the bearing device shown in Fig. 5, the journal bearings 21 and 22 are configured to be separated from each other. In addition, sixth supply passages 46A and 46B which are the intermediate portion lubricating oil supply passages deviate from positions (positions in the radial direction) directly above the passage 16b communicating with the lower portion of the third space portion S3 and are provided to communicate with the space portion 16A around the respective journal bearings 21 and 22 corresponding to the respective journal bearings 21 and 22.

According to this bearing device, sixth supply passages 46A and 46B which are the intermediate portion lubricating oil supply passages deviate from positions directly above the passage 16b communicating with the lower portion of the third space portion S3 and are provided around the respective journal bearings 21 and 22 corresponding to the respective journal bearings 21 and 22, and thus, it is possible to reliably supply the lubricating oil to the portions between the inner peripheral surfaces 21c and 22c of the journal bearings 21 and 22 and the outer peripheral surface 14a of the rotating shaft 14.

Moreover, although it is not shown in the drawings, a nozzle of which an injection port faces the respective journal bearings 21 and 22 may be provided in each of the sixth supply passages 46A and 46B which are the intermediate portion lubricating oil supply passages.

### Reference Signs List

11: exhaust turbine turbocharger
12: turbine
13: compressor
14: rotating shaft
16: bearing accommodating portion
16A: space portion
16b: passage
21: journal bearing
21b: outer peripheral surface
21C: inner peripheral surface
22: journal bearing
22b: outer peripheral surface
22c: inner peripheral surface
43: third supply passage (outer peripheral surface-side lubricating oil supply passage)
44: fourth supply passage (outer peripheral surface-side lubricating oil supply passage)
46: sixth supply passage (intermediate portion lubricating oil supply passage)
46A, 46B: (intermediate portion lubricating oil supply passage)
51: nozzle
51a: injection port
52: tubular member
52a: through-hole

## Claims

1. A bearing device comprising:
a rotating shaft (14);
journal bearings (21, 22) which are provided on the rotating shaft (14), rotatably support the rotating shaft (14) at at least two locations in an axial direction, and each of which includes an outer peripheral surface (21b, 22b) and an inner peripheral surface (21c, 22c) which do not communicate with each other;
a bearing accommodating portion (16) which forms a space portion (16A) accommodating each journal bearing (21, 22); and
an intermediate portion lubricating oil supply passage (46) which communicates with the space portion (16A) at a position between the journal bearings (21, 22),
**characterized in that** the bearing device further comprises
an outer peripheral surface-side lubricating oil supply passage (43, 44) which communicates with the space portion (16A) at a position of the outer peripheral surface of each journal bearing (21, 22).

2. The bearing device according to claim 1,
wherein the journal bearings (21, 22) are configured to be separated from each other, and
wherein the bearing device further includes a nozzle (51) which is provided at a discharge port (46a) at which the intermediate portion lubricating oil supply passage (46) communicates with the space portion (16A) and is disposed such that an injection port (51a) of the nozzle (51) faces each journal bearing (21, 22).

3. The bearing device according to claim 1,
wherein the journal bearings (21, 22) are configured to be separated from each other, and
wherein the bearing device further includes
a tubular member (52) which is provided between the journal bearings (21, 22) such that the rotating shaft (14) is inserted into the tubular member (52) and is accommodated in the space portion (16A) of the bearing accommodating portion (16), and
a through-hole (52a) which penetrates the tubular member (52) in a radial direction and communicates with the intermediate portion lubricating oil supply passage (46).

4. An exhaust turbine turbocharger (11) comprising:
a turbine (12);
a compressor (13);
a rotating shaft (14) which coaxially connects the turbine (12) and the compressor (13) to each other;
a journal bearing (21) which is provided on the rotating shaft (14) and rotatably supports the rotating shaft (14); and
the bearing device according to any one of claims 1 to 3.

## Patentansprüche

1. Eine Lagervorrichtung umfassend:
eine rotierende Welle (14);
Traglager (21, 22), die auf der rotierenden Welle (14) vorgesehen sind, die die rotierende Welle (14) an mindestens zwei Stellen in einer axialen Richtung drehbar lagern und von denen jedes eine äußere Umfangsfläche (21b, 22b) und eine innere Umfangsfläche (21c, 22c) beinhaltet, die nicht miteinander kommunizieren;
einen Lageraufnahmeabschnitt (16), der einen Raumabschnitt (16A) bildet, der jedes Traglager (21, 22) aufnimmt; und
einen Zwischenabschnitt-Schmierölversorgungsdurchgang (46), der mit dem Raumabschnitt (16A) an einer Position zwischen den Traglagern (21, 22) in Verbindung steht, **dadurch gekennzeichnet, dass** die Lagervorrichtung ferner
einen außenumfangsflächenseitigen Schmierölversorgungsdurchgang (43, 44), umfasst, der mit dem Raumabschnitt (16A) an einer Position der Außenumfangsfläche jedes Gleitlagers (21, 22) in Verbindung steht.

2. Die Lagervorrichtung nach Anspruch 1,
wobei die Traglager (21, 22) so konfiguriert sind, dass sie voneinander trennbar sind, und
wobei die Lagervorrichtung ferner eine Düse (51) umfasst, die an einer Auslassöffnung (46a) vorgesehen ist, an der der Zwischenabschnitt-Schmierölversorgungsdurchgang (46) mit dem Raumabschnitt (16A) in Verbindung steht, und so angeordnet ist, dass eine Einspritzöffnung (51a) der Düse (51) jedem Gleitlager (21, 22) zugewandt ist.

3. Die Lagervorrichtung nach Anspruch 1,
wobei die Gleitlager (21, 22) so konfiguriert sind, dass sie voneinander getrennt werden können, und
wobei die Lagervorrichtung ferner
ein rohrförmiges Element (52), das zwischen den Traglagern (21, 22) derart bereitgestellt ist, dass die rotierende Welle (14) in das rohrförmige Element (52) eingeführt und in dem Raumabschnitt (16A) des Lageraufnahmeabschnitts (16) aufgenommen ist, und
ein Durchgangsloch (52a), das das rohrförmige Element (52) in einer radialen Richtung durchdringt und mit dem Zwischenabschnitt-Schmierölversorgungsdurchgang (46) in Verbindung steht, beinhaltet.

4. Ein Abgasturbolader (11), umfassend:
eine Turbine (12);
einen Verdichter (13);
eine rotierende Welle (14), die die Turbine (12) und den Verdichter (13) koaxial miteinander verbindet;
ein Traglager (21), das auf der rotierenden Welle (14) vorgesehen ist und die rotierende Welle (14) drehbar lagert; und
die Lagervorrichtung nach einem der Ansprüche 1 bis 3.

## Revendications

1. Un dispositif de palier comprenant :
un arbre tournant (14) ;
des paliers d'essieu (21, 22) qui sont montés sur l'arbre tournant (14), supportent à rotation l'arbre tournant (14) en au moins deux emplacements dans une direction axiale, et dont chacun comprend une surface périphérique externe (21b, 22b) et une surface périphérique interne (21c, 22c) qui ne communiquent pas entre elles ;
une partie de logement de palier (16) qui forme une partie de dégagement (16A) logeant chaque palier d'essieu (21, 22) ; et
un passage d'alimentation en huile de lubrification en partie intermédiaire (46) qui communique avec la partie de dégagement (16A) en une position située entre les paliers d'essieu (21, 22),
**caractérisé en ce que** le dispositif de palier comprend en outre :
un passage d'alimentation en huile de lubrification côté surface périphérique externe (43, 44) qui communique avec la partie de dégagement (16A) en une position de la surface périphérique externe de chaque palier d'essieu (21, 22).

2. Le dispositif de palier selon la revendication 1,
dans lequel les paliers d'essieu (21, 22) sont configurés pour être séparés l'un de l'autre, et
dans lequel le dispositif de palier comprend en outre un ajutage (51) qui est disposé au niveau d'un orifice de décharge (46a) où le passage d'alimentation en huile de lubrification de partie intermédiaire (46) communique avec la partie de dégagement (16A), et qui est disposé de manière qu'un orifice d'injection (51a) de l'ajutage (51) soit tourné vers chaque palier d'essieu (21, 22).

3. Le dispositif de palier selon la revendication 1,
dans lequel les paliers d'essieu (21, 22) sont configurés pour être séparés l'un de l'autre, et
dans lequel le dispositif de palier comprend en outre :
un organe tubulaire (52) qui est disposé entre les paliers d'essieu (21, 22) de manière que l'arbre tournant (14) soit inséré dans l'organe tubulaire (52) et soit logé dans la partie de dégagement (16A) de la partie de logement de palier (16), et
un orifice traversant (52a) qui pénètre dans l'organe tubulaire (52) dans une direction radiale, et qui communique avec le passage d'alimentation en huile de lubrification de partie intermédiaire (46).

4. Un turbocompresseur à turbine d'échappement (11) comprenant :
une turbine (12) ;
un compresseur (13) ;
un arbre tournant (14) qui relie coaxialement l'un à l'autre la turbine (12) et le compresseur (13) ;
un palier d'essieu (21) qui est disposé sur l'arbre tournant (14) et qui supporte à rotation l'arbre tournant (14) ; et
le dispositif de palier selon l'une des revendications 1 à 3.
